# EUROPÄISCHE PATENTSCHRIFT

(11) **EP 2 622 044 B1**
(45) Veröffentlichungstag und Bekanntmachung des Hinweises auf die Patenterteilung: **19.11.2014**
(21) Anmeldenummer: 11764702.4
(22) Anmeldetag: 13.09.2011
(51) Int. Cl.: C09K 21/00, C08G 63/695, C08L 67/00, C09D 167/00

(54) **HARZE AUS UNGESÄTTIGTEN POLYESTERN UND POLYSILAZANEN SOWIE DAMIT HERGESTELLTE DUROPLASTISCHE REAKTIONSHARZ-FORMSTOFFE**
RESINS FROM UNSATURATED POLYESTER AND POLYSILAZANE AND THERMOSETTING REACTIVE RESIN PRODUCTS MADE THEREOF
RÉSINES Ä BASE D'UN POLYESTER INSATURÉ ET POLYSILAZANE ET DES PRODUITS THERMODURCISSABLE OBTENUS DE CELLES-CI

(30) Priorität: 29.09.2010 DE 102010046914
(43) Veröffentlichungstag der Anmeldung: 07.08.2013
(73) Patentinhaber: Fraunhofer-Gesellschaft zur Förderung der angewandten Forschung e.V., 80686 München (DE); Clariant Finance (BVI) Limited, Road Town, Tortola (VG)
(72) Erfinder: BAUER, Monika, 15712 Koenigs-Wusterhausen (DE); STEFFEN, Sebastian, 12163 Berlin (DE); DECKER, Daniel, 65835 Liederbach (DE); RICHTER, Frank, 65929 Frankfurt (DE)
(74) Vertreter: Olgemöller, Luitgard Maria
(86) Internationale Anmeldenummer: PCT/EP2011/065890
(87) Internationale Veröffentlichungsnummer: WO 2012/041698

(56) Entgegenhaltungen:
- DE-A1-102009 013 410
- US-A- 5 328 965
- DATABASE WPI Week 197547 Thomson Scientific, London, GB; AN 1975-78155W XP002665613, & SU 440 379 A (SOKOLOVA L I) 11. Juni 1975 (1975-06-11)
- ANDRIANOV(DEC) K A ET AL: "Study of the polyaddition reaction of 1,3-bis-(dimethylsilyl) tetramethylcyclodisilazane to unsaturated compounds", POLYMER SCIENCE U.S.S.R, PERGAMON, Bd. 21, Nr. 4, 1. Januar 1979 (1979-01-01) , Seiten 996-1003, XP024130778, ISSN: 0032-3950, DOI: 10.1016/0032-3950(79)90205-3 [gefunden am 1979-01-01]
- DATABASE WPI Week 197132 Thomson Scientific, London, GB; AN 1971-52875S XP002665614, & JP 46 027733 B (ASAHI CHEM IND CO LTD) 23. September 1971 (1971-09-23)

## Beschreibung

Die vorliegende Erfindung betrifft Reaktionsharze aus ungesättigten Polyestern in Kombination mit copolymerisierbaren, vorzugweise vinylgruppenhaltigen Silazanen als Vernetzungsmittel und ggf. zusätzlich einem Reaktivverdünner, in dem die Mischung gelöst vorliegt. Außerdem betrifft die Erfindung Reaktionsharz-Formstoffe aus diesen Reaktionsharzen. Die gehärteten Massen besitzen verbesserte Flammfestigkeiten bei zufriedenstellenden Glasübergangstemperaturen.

Ungesättigte Polyesterharze sind seit langem bekannt und gehen auf eine Erfindung von Ellis & Foster aus dem Jahre 1937 zurück. Flammfeste Polyesterharze werden in der Regel durch Zugabe von Flammschutzmitteln wie Aluminiumtrihydroxid oder Ammoniumphosphat hergestellt, wie z.B. aus EP 848032 bekannt. Die Zugabe solcher Mittel führt in der Regel zu Viskositätserhöhungen, die die Verarbeitbarkeit der Harze negativ beeinflussen, sowie - insbesondere bei sehr hohen Füllstoffgehalten im Bereich von mehr als 50 Gew.-% Füllstoff, bezogen auf das gefüllte Harz - zu geringeren mechanischen Belastbarkeiten der aus den Harzen erzeugten Bauteile.

Aus DE 10 2009 013 410 A1 ist bekannt, dass Hybridpolymere, die durch Umsetzung von mindestens difunktionellen Cyanaten mit monomeren, oligomeren und/oder polymeren Silazanen hergestellt wurden, besonders herausragende Brandeigenschaften besitzen.

Aufgabe der Erfindung ist es, ungesättigte Polyesterharze bereitzustellen, aus denen sich Formstoffe mit verbesserter Brandfestigkeit erzeugen lassen. Aufgabe der Erfindung ist weiterhin die Bereitstellung entsprechender Formstoffe.

Die Lösung der gestellten Aufgabe gelingt dadurch, dass als Polyester-Reaktionsharz eine Mischung aus mindestens einem Polyester und mindestens einem Silazan eingesetzt wird, das eine oder mehrere C=C-Doppelbindungen enthält und über diese bei der Polymerisation der Doppelbindungen des Polyesters in das Produkt einpolymerisiert werden kann.

Ungesättigte Polyester sind das Polykondensationsprodukt aus ungesättigten Dicarbonsäuren, ggf. in Kombination mit gesättigten, häufig aromatischen Dicarbonsäuren, bzw. ihren jeweiligen Anhydriden und Diolen. Charakteristisch ist die Verwendung von α,β-ungesättigten Dicarbonsäuren wie Maleinsäure bzw. Maleinsäureanhydrid oder Fumarsäure. Aber auch Itaconsäure, Mesaconsäure oder Citraconsäure können eingesetzt werden. Der Abstand der Doppelbindungen ist entscheidend für die späteren Eigenschaften des ungesättigten Polyesterharzes und dessen Reaktivität. Aus diesem Grund werden in manchen Fällen zusätzlich gesättigte Dicarbonsäuren eingesetzt, um so die Doppelbindungsdichte zu verringern. Gesättigte

Dicarbonsäuren dienen darüber hinaus zur Einstellung weiterer Eigenschaften der Harz- und der späteren Bauteile. Hierzu verwendet man vorwiegend Phthalsäure bzw. Phthalsäureanhydrid, Isophthalsäure, Terephthalsäure oder Adipinsäure. Aber auch alle anderen gesättigten Dicarbonsäuren können als Zusatz zur Verringerung der Doppelbindungsdichte eingesetzt werden.

Als Alkoholkomponente werden die verschiedensten di- und/oder trifunktionellen Alkohole eingesetzt, wobei in der Regel difunktionelle Alkohole bevorzugt sind, um eine Verzweigung des Polyestermoleküls zu verhindern. Standardmäßig verwendet man gesättigte Alkohole wie zum Beispiel 1,2-Propandiol, Ethylenglykol, Diethylenglykol oder Dipropylenglykol als Diol, wobei natürlich stattdessen Diole mit größerer Kettenlänge und/oder anderem Abstand zwischen den Kettengliedern verwendbar sind. Als Spezial-Diole, die dem Polyestermolekül besondere Eigenschaften verleihen, werden häufig Neopentylglykol, 1,3-Butandiol sowie bisethoxyliertes und bispropoxyliertes Bisphenol A eingesetzt. Diese Aufzählung ist selbstverständlich nicht abschließend und kann durch nahezu jeden aliphatischen Dialkohol ergänzt werden. Sofern die Anwesenheit von trifunktionellen Alkoholen gewünscht ist, werden diese meist in Mischung mit Diolen verwendet.

Die Polykondensationsreaktion zwischen den Säure(anhydrid)- und Alkoholgruppen kann, muss aber nicht, unter Einsatz eines Katalysators (z.B. von Zn- oder Sn-Verbindungen) erfolgen. Dem Ausgangsmaterial für den ungesättigten Polyester oder diesem selbst wird häufig ein Inhibitor gegen eine vorzeitige Polymerisation zugegeben, beispielsweise Hydrochinon. Sofern ausschließlich Dicarbonsäuren und Dialkohole als Ausgangsmaterialien für die Veresterung eingesetzt werden, entstehen rein lineare Produkte, wobei jedoch Verzweigungen durch Nebenreaktionen auftreten können.

Die ungesättigten Polyester liegen in unterschiedlichen Formen vor. Sie können entweder dickflüssig und zäh oder aber hart und spröde sein, je nach eingesetzten Bausteinen und Polykondensationsbedingungen. Sie sind in verschiedenen Lösungsmitteln löslich.

Aufgrund der vorhandenen Doppelbindungen sind die ungesättigten Polyester einer - radikalisch ablaufenden - Polymerisationsreaktion (Polyaddition) zugänglich. Diese kann genutzt werden, um die Polyester untereinander zu vernetzen. Hierfür verwendet man in der Regel Zusätze, die selbst einer radikalischen Polyadditionsreaktion zugänglich sind und bei der Copolymerisation für eine Vernetzung der linearen Polyester-Strukturen sorgen können. Da diese Zusätze vorzugsweise gleichzeitig als Lösemittel für den Polyester dienen, werden sie, wenn sie diese Aufgabe erfüllen können, als "Reaktivverdünner" bezeichnet. Je nach Menge an Reaktivverdünner lässt sich das ungesättigte Polyesterharz eher dünn- oder eher dickflüssig einstellen. Als Reaktivverdünner wird in der Regel Styrol verwendet. Weitere mögliche Reaktivverdünner sind z.B. Acrylate wie Methylmethacrylat oder Styrolderivate. Diese Aufzählung ist nicht abschließend.

Auch dem Reaktivverdünner kann ein Polymerisationsinhibitor wie Hydrochinon zugesetzt werden, um eine vorzeitige Polymerisation zu verhindern.

Die Mischung aus Polyester und Reaktivverdünner wird auch als Reaktionsharz oder ungesättigtes Polyesterharz (kurz: UP-Harz) bezeichnet.

Die Aushärtung (Vernetzung) der ungesättigten Polyesterharze erfolgt durch einen Radikalinitiator. Dies sind Verbindungen, die durch die Einwirkung von Temperatur oder Strahlung in Radikale zerfallen, die dann die radikalische Copolymerisation anstoßen. Diese kann, einmal angestoßen, nicht mehr gestoppt werden. Für eine thermische Härtung verwendet man in der Regel Hydroperoxide, Peroxide und Perester aber auch andere Verbindungen, die die erforderlichen Eigenschaften besitzen. Für die industrielle Härtung wird häufig Methylethylketonperoxid (MEKP) eingesetzt. Dies geschieht oft in Verbindung mit einem Beschleuniger (z.B einem Cobalt-, Mangan- oder Eisennaphthenat oder -octanoat, aber auch einem tertiären Amin) um eine Härtung bei Raumtemperatur zu ermöglichen. Prinzipiell können alle bekannten Radikalinitiatoren eingesetzt werden. Die Auswahl des richtigen Initiators wird in Hinblick auf die gewünschten Verarbeitungseigenschaften der Polyesterharze und die angestrebten Härtungstemperaturen getätigt (der Zusatz von Beschleuniger ermöglicht in Verbindung mit MEKP eine Kalthärtung). Neben der thermischen Härtung sind auch strahlenchemische Härtungsverfahren wie z.B. Elektronenstrahlhärtung oder UV möglich. Hierfür stehen zahlreiche Initiatorsysteme zur Verfügung.

Die erste Stufe der Härtung besteht in einer Gelierung, bei der die wachsenden Molekülketten nicht mehr diffundieren können, der entstehende Formstoff nicht mehr fließt und deshalb seine endgültige Gestalt bekommen haben sollte. Anschließend erfolgt die vollständige Härtung, die in der Regel mit einer gewissen Schrumpfung einhergeht.

Ungesättigte Polyesterharze werden auf vielfältige Art und Weise verarbeitet. Die Hauptvertreter sind das Hand-lay-up / Spray-lay-up (Aufstreichen oder Aufsprühen des Harzes auf Verstärkungsmaterialien und anschließend Einarbeitung der Harze von Hand mit Rollen und Walzen), das RTM-Verfahren (Resin Transfer Molding) das SMC / BMC-Verfahren und andere Verarbeitungsverfahren. Prinzipiell können alle ungesättigten Polyesterharze auf diese Weise verarbeitet werden, bedürfen jedoch oft noch einer genauen Einstellung auf das jeweilige Verfahren.

Die ungesättigten Polyesterharz-Formstoffe sind Duroplaste. Ihre Hauptanwendung finden sie im Schiff-, Automobil- und Schienenfahrzeugsbau. Weitere Anwendungsgebiete sind Gehäusematerialien für die Elektronikbranche, Windkraftanlagenrotorblätter und andere groß- bis kleinvolumige Anwendungen auf den verschiedensten technischen Gebieten. Häufig werden sie dabei in mit Fasern verstärkter Form eingesetzt. Als Fasern werden häufig Glasfasern verwendet, seltener Kohlenstofffasern.

Das voranstehend für die Erfindung eingesetzte Silazan ist ein monomeres Silazan, ein Oligosilazan und/oder ein Polysilazan und weist mindestens eine C=C-Doppelbindung auf. In der vorliegenden Erfindung soll der Begriff "Silazan" demnach monomere, oligomere und polymere Silazane sowie Mischungen von Silazanen umfassen, die monomer, oligomer und/oder polymer sein können, sofern nichts anderes für den speziellen Fall angegeben ist. Unter "Oligosilazanen" bzw. "oligomeren Silazanen" sollen erfindungsgemäß Silazane mit 2 bis 10 Siliziumatomen verstanden werden. "Polysilazane" bzw. "polymere Silazane" sind solche mit mindestens 11 Siliziumatomen.

Silazane, insbesondere Polysilazane, sind in den letzten Jahren in verschiedener Hinsicht ins Interesse gerückt. Man hat sie in Phenolharze und Epoxyharze eingebaut und ihre Eischubreaktion in Isocyanate untersucht, wobei Polyharnstoffsilazane entstehen. Diese sind insbesondere als Ausgangsmaterialien für die Herstellung von Keramiken interessant.

Das mindestens eine Silazan kann für die Zwecke der vorliegenden Erfindung dem Polyester als einziges Comonomer zugesetzt werden; häufig wird es jedoch in Mischung mit einem gängigen Reaktivverdünner verwendet. Dies ist dann die Regel, wenn das Silazan den Polyester nicht oder nicht ausreichend lösen kann und eine Reaktion in der Schmelze nicht möglich oder nicht gewünscht ist.

Als C=C-doppelbindungshaltiges Silazan wird bevorzugt ein vinylgruppenhaltiges Silazan eingesetzt. Dieses kann eine einzige, zwei oder auch mehr Vinylgruppen enthalten und dementsprechend eine weiter- oder engermaschige Vernetzung bewirken.

Der einfachste Silazankörper besitzt die Formel R₃Si-NR-SiR₃ mit beliebigen organischen Resten R. Dabei ist der am Stickstoff gebundene organische Rest vorzugsweise Wasserstoff, in manchen Fällen auch ein (meist 1-4 Kohlenstoffatome enthaltender) Alkylrest wie Methyl. Für die Zwecke der Erfindung ist jedes Silazan dieser Struktur geeignet, sofern mindestens ein Rest R eine C=C-Doppelbindung trägt und vorzugsweise eine Vinylgruppe ist. Als Beispiel hierfür sei 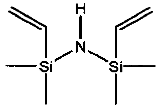 aufgeführt. In dieser Darstellung stehen die Bindungsstriche am Silicium für Substituenten, ausgewählt unter Wasserstoff und geradkettigem, verzweigtem oder cyclischem, substituiertem oder - bevorzugt - unsubstituiertem Alkyl, Aryl, Arylalkyl, Alkylaryl, Alkenylaryl oder Arylalkenyl, vorzugsweise Wasserstoff oder C₁-C₄-Alkyl. Dabei stehen besonders bevorzugt keine, nur ein oder maximal zwei der Bindungsstriche für Wasserstoff. Anstelle der Vinylgruppe könnte in jedem dieser Fälle ein anderer Rest am Silicium gebunden sein, der eine C=C-Doppelbindung trägt, z.B. ein Allyl- oder Styrylrest. Anstelle des Wasserstoff-Substituenten am Stickstoff könnte in jedem dieser Fälle das Stickstoff-Atom einen Alkylrest mit vorzugsweise 1 bis 4 Kohlenstoffatomen oder einen substituierten oder (bevorzugt) unsubstituierten Phenylrest tragen.

Oligomere und polymere Silazane enthalten mindestens zwei Si-N-Gruppierungen, die ebenfalls wie für das obige Silazan angegeben substituiert sein können. Da sowohl die Silicium-Atome als auch die Stickstoffatome je nach Ausgangsmaterialien unterschiedlich substituiert sein können, ergibt sich eine große Vielfalt von Substanzen, die je nach Herstellungsweise auch als Mischung mit unterschiedlichen Moleküllängen vorliegen können. Die genannten Silazane können dabei kettenförmig vorliegen; häufig haben sie jedoch Ringstruktur.

Allgemein lassen sich die erfindungsgemäß einsetzbaren oligomeren und polymeren Silazane darstellen als zusammengesetzt aus einem oder mehreren der folgenden, notwendigerweise oder optional vorhandenen Bausteine:

-Si(R²)(R³)-N(R⁴)- Baustein A (notwendig)

worin
R² ein organischer, mindestens eine C=C-Doppelbindung enthaltender Rest, vorzugsweise Vinyl ist, R³ in mehreren Bausteinen A im selben Molekül gleich oder verschieden sein kann und Wasserstoff oder geradkettiges, verzweigtes oder cyclisches, substituiertes oder - bevorzugt - unsubstituiertes Alkyl, Alkenyl, Aryl, Arylalkyl, Alkylaryl, Alkenylaryl oder Arylalkenyl bedeutet, vorzugsweise Wasserstoff, Phenyl oder C₁-C₄-Alkyl ist und ganz besonders bevorzugt Wasserstoff oder Methyl ist, und R⁴ in mehreren Bausteinen A im selben Molekül gleich oder verschieden sein kann und Wasserstoff, C₁-C₄-Alkyl oder Phenyl, bevorzugt Wasserstoff oder Methyl und ganz besonders bevorzugt Wasserstoff bedeutet,

-Si(R³)(R⁵)-N(R⁴)- Baustein B (optional)

worin
R³ und R⁴ wie für Baustein A definiert sind und R⁵ in mehreren Bausteinen A im selben Molekül gleich oder verschieden sein kann und in seltenen Fällen Wasserstoff, ansonsten geradkettiges, verzweigtes oder cyclisches, substituiertes oder - bevorzugt - unsubstituiertes Alkyl, Alkenyl, Aryl, Arylalkyl, Alkylaryl, Alkenylaryl oder Arylalkenyl bedeutet, vorzugsweise C₁-C₄-Alkyl ist und ganz besonders bevorzugt Methyl ist,

-Si(R³)(R⁶)-N(R⁴)- Baustein C (optional)

worin
R³ und R⁴ wie oben definiert sind und R⁶ eine Verknüpfungsstelle zu einem weiteren, beliebigen Baustein der hier genannten Bausteine darstellt, wobei die Verknüpfung über eine Alkylengruppe, insbesondere eine Ethylengruppe, zu dem Siliciumatom des weiteren Bausteins erfolgt

-Si(R³)(R⁵)-N(R⁷)- Baustein D (optional)

worin R³ und R⁵ wie oben definiert sind und R⁷ eine Verknüpfungsstelle zu einem weiteren, beliebigen Baustein der hier genannten Bausteine darstellt, wobei die Verknüpfung über eine direkte Bindung des Stickstoffatoms des Bausteins D an das Siliciumatom des weiteren Bausteins erfolgt,

-Si(R³)(R⁵)P-Si(R³)(R⁵)-N(R⁴)- Baustein E (optional)

worin R³, R⁴ und R⁵ wie oben definiert sind und R³ und R⁵ im selben Baustein eine identische oder unterschiedliche Bedeutung haben können und P eine Alkylengruppe mit 1 bis 12 Kohlenstoffatomen, vorzugsweise Ethylen ist,

-Si(R³)(R⁵)-N(R⁴)-C(O)-N(R⁴)- Baustein F (optional)

worin R³, R⁴ und R⁵ wie oben definiert sind und im selben Baustein eine identische oder unterschiedliche Bedeutung haben können.

Jeder der genannten Bausteine kann beidseitig an ebensolche Bausteine gebunden vorliegen (wenn die Silazane ringförmig sind, enthalten sie nur derartige Bausteine); alternativ sitzt er randständig im Molekül. In diesem Falle kann entweder das Siliciumatom einen weiteren Rest R³ mit der oben angegebenen Bedeutung tragen, oder das Stickstoffatom trägt einen weiteren Rest R⁶, der eine der drei folgenden Bedeutungen besitzt:
- R³ wie oben definiert,
- Si(R³)₃, worin die drei Reste R³ gleich oder verschieden sein können und die obige Bedeutung besitzen, wobei vorzugsweise keiner dieser Reste ein Wasserstoffatom darstellt, und
- Si(R³)₂-X-R⁷-Si(R³)_{q}(OR³)_{3-q}, worin die Reste R³ gleich oder verschieden sein können und die obige Bedeutung besitzen und dabei bevorzugt Wasserstoff oder Alkyl, insbesondere C₁-C₄-Alkyl sind, sofern sie am Silicium gebunden vorliegen, und Alkyl, insbesondere C₁-C₄-Alkyl sind, sofern sie in der Gruppierung OR³ vorliegen, X entweder O oder NR⁴ in der obigen Bedeutung ist, R⁷ eine Einfachbindung oder eine substituierte oder - bevorzugt - unsubstituierte, geradkettige, verzweigte oder cyclische Alkylengruppe darstellt und q 0, 1, 2 oder 3 ist.

Die Anzahl der Bausteine und ihr relativer Anteil kann beliebig schwanken; häufig liegt die Gesamtzahl bei bis zu 500, gegebenenfalls aber auch wesentlich höher. Die Bausteine können regelmäßig verteilt oder blockweise angeordnet sein; vorzugsweise liegen sie jedoch randomisiert in den Atomen vor.

Beispiele sind Oligomere/Polymere mit den nachstehenden, in eckige Klammern gesetzten Bausteinen, deren relativer Anteil zueinander im Molekül jeweils hinter der eckigen Klammer angegeben ist: 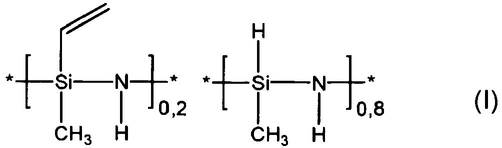 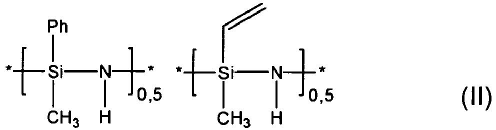 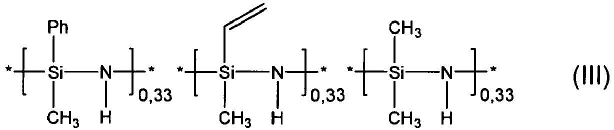 und ausgehend von Mischungen von Polysilazanen der Formel (I) weiterhin:

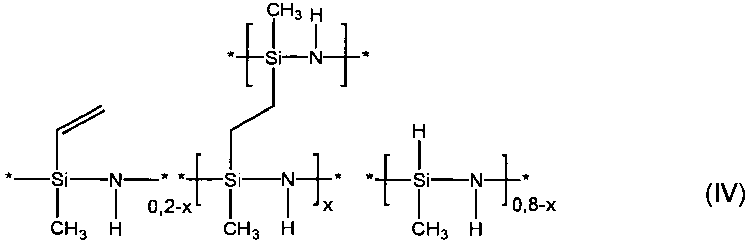

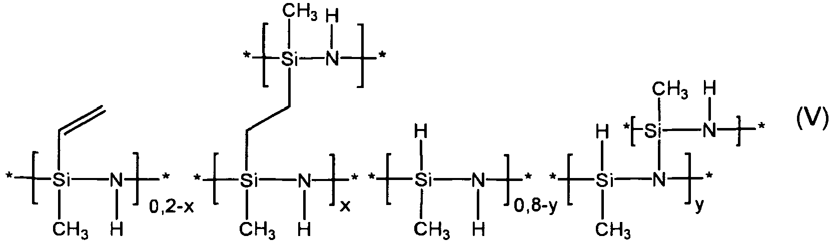

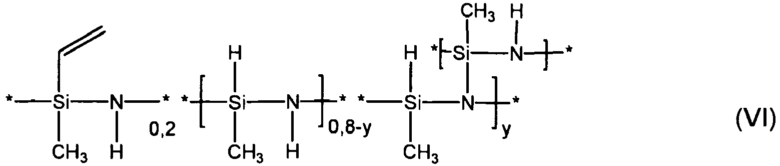

Silazane der obigen Strukturen sind teilweise im Handel erhältlich und nach Standardverfahren, insbesondere der Ammonolyse von Monohalogensilanen, beispielsweise wie in US 4,395,460 und der darin zitierten Literatur beschrieben, herstellbar. Dabei entstehen z.B. durch die Umsetzung eines Monohalogensilans mit drei organischen Resten Silazane der Formel (I), worin die Indices n und o null sind, der Index m 1 bedeutet und R⁵ die Bedeutung Si(R¹)(R^{2'})(R^{3'}) besitzt. Die organischen Reste werden bei der Reaktion nicht abgespalten.

Ebenso ist es möglich, analog US 6,329,487 B1 der Kion Corporation Mono-, Di- oder Trisilane in einer Druckapparatur in flüssigem Ammoniak zu ammonolysieren und so Silazane der allgemeinen Formel (I) zu erhalten.

Werden dabei Halogensilane mit mindestens einer Si-H-Bindung allein und/oder in Kombination mit Di- bzw. Trihalogensilanen in einem Überschuss an flüssigem, wasserfreiem Ammoniak umgesetzt und länger in diesem Medium belassen, bilden sich in der durch das entstehende Ammoniumhalogenid-Salz bzw. die entsprechende Säure saurer gewordenen Umgebung im Laufe der Zeit durch Abreaktion von Si-H-Bindungen Polymerisationsprodukte, in denen die Indices m, n und o einen höheren Wert und/oder ein anderes Verhältnis als zuvor aufweisen, möglicherweise katalysiert durch die Anwesenheit von gelöstem und ionisiertem Ammoniumhalogenid.

Ebenso ist in US 6,329,487 B1 beschrieben, dass entsprechende Polymerisationsprodukte durch die Einwirkung von in Ammoniak gelöstem Natrium erhalten werden können.

US 4,621,383 und WO 87/05298 beschreiben weiterhin die Möglichkeit der Synthese von Polysilazanen durch übergangsmetallkatalysierte Reaktionen.

Durch geeignete Wahl der organischen Substituenten am Siliciumatom des Silans bzw. einer Mischung entsprechender Ausgangssilane lassen sich mit diesen Verfahren eine Vielzahl von Silazanen der Formel (I) erzeugen, worin der Index o null ist, wobei häufig eine Mischung von linearen und kettenförmigen Polymeren entsteht.

Zum Reaktionsmechanismus siehe auch die Dissertation von Michael Schulz am Forschungszentrum Karlsruhe, Institut für Materialforschung "Mikrostrukturierung präkeramischer Polymere mit Hilfe der UV- und Röntgentiefenlithographie", November 2003, FZKA 6901. Dort wird auch die Herstellung von Silazanen der Formel (I) beschrieben, worin der Index o null ist und die Siliciumatome in den Blöcken mit den Indices m und n unterschiedliche Substituenten tragen.

Dort wird auch auf die Herstellung von Harnstoffsilazanen verwiesen: Setzt man Silazanen monofunktionelle Isocyanate zu, erfolgt eine Einschubreaktion der NCO-Gruppe in N-H-Bindungen unter Ausbildung einer Harnstoffgruppe [siehe die vorstehend beschriebenen Silazane der Formel (II)]. Im Übrigen wird hinsichtlich der Herstellung von Harnstoffsilazanen und Poly(Harnstoffsilazanen) auf US 6,165,551, US 4,929,704 und US 3,239,489 verwiesen.

Die Herstellung von Verbindungen der Formel (III) (alkoxy-substituierten Silazanen) ist aus US 6,652,978 B2 bekannt. Zur Herstellung dieser Verbindungen können monomere oder oligomere/polymere Silazane der Formel (I), worin o null ist, mit amino- oder hydroxygruppenhaltigen Alkoxysilanen, beispielsweise 3-Aminopropyl-triethoxysilan, umgesetzt werden.

Ein Herstellungsverfahren für Verbindungen der Formel (I) mit o ungleich null wird in der Dissertation von G. Motz (G. Motz, Dissertation, Universität Stuttgart, 1995) konkret am Beispiel der Ammonolyse des 1,2-Bis(dichlormethylsilyl)ethans vorgestellt. Die Herstellung eines speziellen Vertreters dieser Verbindungen, ABSE, wird gemäß S. Kokott und G. Motz, "Modifizierung des ABSE-Polycarbosilazans mit Multi-Walled Carbon Nanotubes zur Herstellung spinnfähiger Massen", Mat.-wiss. u. Werkstofftech. 2007, 38 (11), 894-900, durch Hydrosilylierung und Ammonolyse einer Mischung aus MeHSiCl₂ und MeViSiCl₂ bewirkt.

N-Alkyl-substituierte Silazane wiederum sind in gleicher Weise für den Fachmann ohne weiteres herstellbar, indem die entsprechenden Halogensilane mit Alkylaminen zur Reaktionen gebracht werden, wie z.B. in US 4,935,481 und US 4,595,775 beschrieben.

Das Polysilazan der Formel (IV) ist eine aufbereitete Form eines Polyvinylsilans der Formel (I), das unterschiedlich große Moleküle enthält. Durch Destillieren werden leichtsiedende Komponenten daraus entfernt. Dabei erfolgt zu einem gewissen Maße eine thermische Vernetzung über die Doppelbindungen und die Si-H-Gruppen in der sog. Hydrosilylierung. Erfolgt nach Destillation eine Umsetzung in Gegenwart eines Fluoridkatalysators, wodurch eine Dehydrokopplung unter Neubildung von Si-N-Si-Gruppen unter Bildung von H₂ auftritt; es bilden sich Polysilazane der Formel (V). Wird eine derartige fluoridkatalysierte Reaktion an einer Mischung von Polysilazanen der Formel (I) durchgeführt, die niedrigsiedende Komponenten enthält, kann man zu Produkten der Formel (VI) gelangen.

Zur Herstellung der erfindungsgemäßen Polyesterharze wird ein ungesättigter Polyester mit einem Silazan oder einer Silazanmischung wie voranstehend definiert gemischt. Prinzipiell ist die Erfindung für jede Art von ungesättigtem Polyesterharz geeignet. Es ist jedoch bevorzugt, dass der Polyester eine relativ niedrige Säurezahl besitzt, weil dies die Kompatibilität zwischen den Komponenten fördert. Außerdem muss bei sehr hohen Säurezahlen befürchtet werden, dass die Si-N-Gruppen unter NH₃-Abspaltung zerfallen, was zu heftigen, unerwünschten Nebenreaktionen führen kann. Eine Säurezahl von 20 mg/KOH sollte daher möglichst keinesfalls überschritten werden; bevorzugt liegt die Zahl unter 15 mg/KOH und besonders bevorzugt unter 10 mg/KOH.

Sofern das Silazan den Polyester nicht lösen kann, ist es weiterhin bevorzugt, entweder ein Lösemittel oder einen Reaktivverdünner zuzusetzen. Zwar kann die Reaktion auch in der Schmelze erfolgen, jedoch ist diese Umsetzung schwerer zu beherrschen. Ein Reaktivverdünner ist gegenüber einem Lösemittel zu bevorzugen, weil dieser bei der radikalischen Polymerisation vollständig in das entstehende Netzwerk eingebaut werden kann, während ein Lösemittel nachträglich aus dem Netzwerk entfernt werden muss. Günstig als Reaktivverdünner ist das standardmäßig viel verwendete Styrol.

Das Mengenverhältnis von ungesättigtem Polyester zu Silazan und gegebenenfalls zum Reaktivlösemittel ist prinzipiell nicht kritisch, weil alle genannten Komponenten an der radikalischen Polymerisation teilnehmen und statistisch in das entstehende Netzwerk eingebaut werden. Durch Verwendung unterschiedlicher Mengenrelationen lassen sich unterschiedlich dichte Netzwerke erhalten. Außerdem können die Eigenschaften der Polyesterharz-Formstoffe durch die Anteile an aliphatischen/linearen oder vernetzten Strukturen (z.B. durch den Einsatz entsprechender Silazane) und aromatischen Strukturen (z.B. durch den Einsatz von Styrol als Reaktivverdünner) gesteuert werden, um eine hohe Netzwerkdichte (mit der Folge eines zu spröden gehärteten Produkts) oder ggf. eine unerwünscht geringe Netzwerkdichte (mit der Folge einer ggf. unerwünscht niedrigen Glasübergangstemperatur) zu vermeiden, wie dem Fachmann bekannt. Möglich ist z.B. die Verwendung von Polyester oder Polyester+Reaktivverdünner und Silazan im Mengenverhältnis (Gew./Gew.) von 1:100 bis 100:1, vorzugsweise von 1:10 bis 10:1 und stärker bevorzugt von 1:5 bis 5:1. Wenn Reaktivverdünner vorhanden ist, ist ein Mengenverhältnis (Gew./Gew.) zwischen Polyester und Reaktivverdünner von 1:10 bis 10:1, vorzugsweise 1:5 bis 5:1 günstig. Kommerziell werden häufig Gemische im Verhältnis zwischen 4:1 und 1:1 angeboten.

Um blasenfreie Produkte zu erhalten, sollte die Mischung vor der Verarbeitung entgast werden, beispielsweise bei ca. 200 mbar, sofern kein niedrigsiedendes Lösemittel enthalten ist.

Die Verarbeitung kann auf beliebige Weise erfolgen, beispielsweise wie oben für Polyesterharze des Standes der Technik beschrieben oder als Gießharz. Eine wesentliche Ausführungsform der Erfindung betrifft faserverstärkte Polyesterharz-Formmassen. Diese können z.B. über das bekannte RTM-Verfahren (resin transfer molding) hergestellt werden. Bei diesem Verfahren wird ein trockener Fasergewebestapel in ein Werkzeug gelegt und mittels einer Presse in Form gebracht. Anschließend wird er mit dem erfindungsgemäßen Harz in dünnflüssiger Form imprägniert, in der Regel durch Druck oder - z. B. bei VARTM (vacuum assisted RTM) - durch Vakuum im geschlossenen Werkzeug, und sodann ausgehärtet, was in der Regel thermisch erfolgt, wodurch man das entsprechende Bauteil erhält.

Die Aushärtung der Reaktivharz-Mischung kann in bekannter Weise erfolgen. Günstig ist der Einsatz schwach oxidierender Peroxide, wie dem Fachmann bekannt. Gute Ergebnisse lassen sich mit tert.-Butylperbenzoat erzielen.

Die gehärteten Massen zeichnen sich durch eine Glastemperatur von bis zu 155°C aus. Die Brandfestigkeit nimmt deutlich zu (es ergibt sich nach den Beispielen eine Senkung des MAHRE-Werts von Reinharzproben um ca. 30% gegenüber den vergleichbaren Polyestern ohne Silazan). Besonders vorteilhaft ist, dass die Brandrückstände deutlich höher sind (so findet man noch ca. 30-50 Masse-% an Material nach der Verbrennung der erfindungsgemäßen Formstoffe, während übliche UP-Formstoffe einen Brandrückstand von nur ca. 1 Masse-% besitzen) Auch weisen die Probekörper nach dem Verbrennen noch eine Restfestigkeit auf. Im Falle von Kohlefasergewebe-RTM-Proben konnte der MAHRE-Wert auf einen Wert von unter 100 kW/m² gesenkt werden. Zudem wurde eine sehr geringe absolute Wärmefreisetzung von 10 MJ/m² erreicht. Der Masseverlust während der Verbrennung beträgt nur 15%.

### Ausführungsbeispiele

### Beispiel 1

50 Gew.-Teile eines Polyesters aus 1 mol Maleinsäureanhydrid, 0,5 mol Phthalsäureanhydrid, 0,84 mol Propylenglykol und 0,75 mol Dipropylenglykol mit einem Endgruppenverschluss der COOH-Endgruppen durch 1-Octanol (Zugabe isomolar bei einer Säurezahl von 25 mg KOH/g), mit einer Endsäurezahl von 10 mg KOH/g, gelöst in 40 Gew.-% Styrol, wurden mit 50 Gew.-Teilen eines Silazans der ungefähren Formel (IV) (hergestellt durch Destillieren einer Mischung eines Vinylsilazans, das aus 20% Bausteinen -Si(CH₃)(CH=CH₂)-NH- und 80% Bausteinen -Si(H)(CH=CH₂)-NH- bestand, wobei teilweise eine thermische Vernetzung über die Doppelbindungen und die Si-H-Gruppen erfolgte (sog. Hydrosilylierung)) und 0,5 Gew.-Teilen tert-Butylperbenzoat mit Hilfe eines Glasstabes kräftig vermischt, wobei Gasblasen aufstiegen. Nach dem Durchmischen wurde die Mischung bei 200 mbar entlüftet, bis keine sichtbaren Gasblasen mehr vorhanden waren. Dann wurde sie in eine Plattenform gefüllt und bei 160-180°C ausgehärtet.

Es wurden die in Tabelle 1 dargestellten Daten gemessen.

### Beispiel 2

Beispiel 1 wurde mit der Änderung wiederholt, dass 66,6 Gew.-Teile des Polyesterharzes, 33,3 Gew.-Teile des Silazans und 0,66 Gew.-Teile tert.-Butylperbenzoat eingesetzt wurden.

Es wurden die in Tabelle 1 dargestellten Daten gemessen.

### Beispiel 3

66,6 Gew.-Teile eines ungesättigten Polyesters aus 1 mol Fumarsäure, 0,4 mol Neopentylglykol, 0,606 mol bispropoxyliertem Bisphenol A und 0,051 mol Propylenglykol mit einem Endgruppenverschluss der COOH-Endgruppen durch 1-Octanol (Zugabe isomolar bei einer Säurezahl von 25 mg KOH/g) mit einer Endsäurezahl von 4 mg KOH/g gelöst in 50 Gew.-% Styrol, wurden mit 33,3 Gew.-Teilen des Silazans gemäß Beispiel 1 sowie 0,66 Gew.-Teilen tert.Butylperbenzoat gemischt und ausgehärtet wie in Beispiel 1 beschrieben.

Es entstand eine blasenfreie Reinharzplatte.

### Beispiel 4

Eine Mischung wurde analog zu Beispiel 3 hergestellt und mittels RTM verarbeitet. Als Verstärkungsmaterial wurden Kohlefasergewebe verwendet. Die Aushärtung erfolgte analog zu den Bedingungen in Beispiel 1 Die Charakterisierung lieferte die in Tabelle 1 gezeigten Daten.

### Vergleichsbeispiele 5 und 6

Die Harze der Beispiele 1 und 3 wurden ohne Zusatz von Silazan, aber im Übrigen wie in diesen Beispielen beschrieben polymerisiert. Die Glasübergangstemperatur der erhaltenen Formstoffe ist in Tabelle 1 gezeigt.

**Tabelle 1**

| | TTI [s] | HRRpeak [kW/m²] | MARHE [kW/m²] | THR [MJ/m²] | TSR [m²/m²] | Δm [%] | T_{G} [°C] |
|---|---|---|---|---|---|---|---|
| Beispiel 1 | 45 | 595 | 277 | 102 | 5200 | 51 | ca.60-70 |
| Beispiel 2 | 43 | 732 | 319 | 114 | 6400 | 66 | 90 |
| Beispiel 4 | 42 | 243 | 95 | 10 | 400 | 15 | 155 |
| Vergleichsbeispiel 5 | | | | | | | 106 |
| Vergleichsbeispiel 6 | | | | | | | 170 |

| | | | | | | | |
|---|---|---|---|---|---|---|---|
| Abkürzungen: TTI = (Time of ignition; Entzündungszeit) HRRpeak = Heat Release Rate peak (Maximale Wärmefreisetzungsrate) MARHE (Maximum average rate of heat emission; Maximale mittlere Wärmeemission THR = Total heat release (Gesamt-Wärmefreisetzung) TSR = Total smoke released (Gesamt-Rauchfreisetzung) Δm bezeichnet den Masseverlust in % durch die Verbrennung, d.h. 100% - Δm gibt die Masse des Brandrückstands (CR = char residue) an. | | | | | | | |

## Patentansprüche

1. Ungesättigtes Polyesterharz, enthaltend
(a) einen Polyester oder ein Polyestergemisch, hergestellt aus mindestens einer ungesättigten Dicarbonsäure und mindestens einem Diol
und
(b) mindestens ein Silazan, das eine oder mehrere C=C-Doppelbindungen enthält und einer Copolymerisation mit einer C=C-Doppelbindung der Dicarbonsäure zugänglich ist.

2. Ungesättigtes Polyesterharz nach Anspruch 1, weiterhin enthaltend (c) einen Reaktivverdünner.

3. Ungesättigtes Polyesterharz nach Anspruch 2, worin der Reaktiwerdünner ein unsubstituiertes oder substituiertes Styrol ist.

4. Ungesättigtes Polyesterharz nach einem der voranstehenden Ansprüche, weiterhin enthaltend
(d) mindestens einen Radikalinitiator.

5. Ungesättigtes Polyesterharz nach einem der voranstehenden Ansprüche, worin der Polyester eine Säurezahl von unter 12 mg/KOH aufweist.

6. Ungesättigtes Polyesterharz nach einem der voranstehenden Ansprüche, worin das Silazan, das einer Copolymerisation mit einer C=C-Doppelbindung der Dicarbonsäure zugänglich ist, an Siliciumatomen gebundene Vinylgruppen aufweist.

7. Ungesättigtes Polyesterharz nach Anspruch 6, worin zumindest ein Teil des genannten Silazans den Baustein -Si(R)(CH=CH₂)-NH- mit R gleich H oder Methyl aufweist.

8. Ungesättigter Polyesterharz-Formstoff, erhältlich oder erhalten durch Vernetzung eines ungesättigten Polyesterharzes nach einem der Ansprüche 1 bis 7.

9. Ungesättigter Polyesterharz-Formstoff nach Anspruch 8, der mindestens ein Verstärkungsmaterial, insbesondere Verstärkungsfasern, enthält.

10. Verfahren zum Herstellen eines ungesättigten Polyesterharzes nach einem der Ansprüche 1 bis 7, **gekennzeichnet durch** die Schritte
(a) Bereitstellen eines Polyesters aus mindestens einem Diol und mindestens einer ungesättigten Dicarbonsäure wie in einem der Ansprüche 1 und 5 definiert,
(b) Bereitstellen mindestens eines Silazans, das eine oder mehrere C=C-Doppelbindungen enthält und einer Copolymerisation mit einer C=C-Doppelbindung der Dicarbonsäure zugänglich ist, wie in einem der Ansprüche 1, 6 und 7 definiert,
(c) Vermischen der Komponenten gemäß (a) und (b).

11. Verfahren nach Anspruch 10, worin der Polyester und/oder das Silazan in einem Lösemittel oder einem Reaktiwerdünner gelöst bereitgestellt wird/werden und/oder worin dem Polyester ein Polymerisationsinhibitor beigemischt ist.

12. Verfahren zum Herstellen eines ungesättigten Polyesterharz-Formstoffs nach Anspruch 8, umfassend
(a) das Bereitstellen eines ungesättigten Polyesterharzes wie in einem der Ansprüche 1 bis 7 definiert und
(b) das Aushärten des ungesättigten Polyesterharzes mit Hilfe eines Radikalinitiators unter Ausbildung des Formstoffs.

13. Verfahren zum Herstellen eines ungesättigten, Verstärkungsfasern enthaltenden Polyesterharz-Formstoffs gemäß Anspruch 9, umfassend
(a) das Bereitstellen eines ungesättigten Polyesterharzes wie in einem der Ansprüche 1 bis 7 definiert,
(b) das Einarbeiten von Fasern in das ungesättigte Polyesterharz oder das Imprägnieren oder Beschichten von Fasern oder das Befüllen einer Fasern enthaltenden Form mit dem Polyesterharz sowie
(c) das Aushärten des ungesättigten Polyesterharzes mit Hilfe eines Radikalinitiators unter Ausbildung des Formstoffs.

14. Verfahren nach Anspruch 12 oder 13, worin das Bereitstellen des ungesättigten Polyesterharzes durch dessen Herstellung gemäß Anspruch 10 oder 11 erfolgt.

15. Verfahren nach einem der Ansprüche 12 bis 14, worin das ungesättigte Polyesterharz entgast wird, bevor es in eine Form überführt wird, in der seine Aushärtung erfolgt.

## Claims

1. Unsaturated polyester resin, comprising
(a) a polyester or a polyester mixture, produced from at least one unsaturated dicarboxylic acid and at least one diol,
and
(b) at least one silazane comprising one or a plurality of C=C double bonds which is accessible for copolymerization with a C=C double bond of the dicarboxylic acid.

2. Unsaturated polyester resin according to claim 1, further comprising
(c) a reactive diluting agent.

3. Unsaturated polyester resin according to claim 2, wherein the reactive diluting agent is an unsubstituted or substituted styrene.

4. Unsaturated polyester resin according to any one of the preceding claims, further comprising
(d) at least one radical initiator.

5. Unsaturated polyester resin according to any one of the preceding claims, wherein the polyester has an acid number of less than 12 mg/KOH.

6. Unsaturated polyester resin according to any one of the preceding claims, wherein the silazane which is accessible for copolymerisation with a C=C double bond of the dicarboxylic acid comprises vinyl groups bound to silicon atoms.

7. Unsaturated polyester resin according to claim 6, wherein at least part of the mentioned silazane comprises the component -Si(R)(CH=CH₂)-NH- where R equals H or methyl.

8. Unsaturated polyester resin moulding material which can be obtained or has been obtained by cross-linking an unsaturated polyester resin according to any one of claims 1 to 7.

9. Unsaturated polyester resin moulding material according to claim 8, containing at least one reinforcing material, in particular reinforcing fibres.

10. Method for the production of an unsaturated polyester resin according to any one of claims 1 to 7, **characterized by** the steps of
(a) providing a polyester from at least one diol and at least one unsaturated dicarboxylic acid as defined in any one of claims 1 to 5,
(b) providing at least one silazane containing one or a plurality of C=C double bonds which is accessible for copolymerization with a C=C double bond of the dicarboxylic acid as defined in any one of claims 1, 6 and 7,
(c) mixing the components of (a) and (b).

11. Method according to claim 10, wherein the polyester and/or the silazane is/are provided dissolved in a solvent or a reactive diluting agent and/or wherein a polymerization inhibitor is added to the polyester.

12. Method for the production of an unsaturated polyester resin moulding material according to claim 8, comprising
(a) providing an unsaturated polyester resin as defined in any one of claims 1 to 7 and
(b) curing the unsaturated polyester resin by means of a radical initiator under the formation of the moulding material.

13. Method for the production of an unsaturated polyester resin moulding material containing reinforcing fibres according to claim 9, comprising
(a) providing an unsaturated polyester resin as defined in any one of claims 1 to 7,
(b) incorporating fibres into the unsaturated polyester resin or impregnating or coating fibres or filling a mold containing fibres with the polyester resin, and
(c) curing the unsaturated polyester resin by means of a radical initiator under the formation of the moulding material.

14. Method according to claim 12 or 13, wherein the unsaturated polyester resin is provided by its production according to claim 10 or 11.

15. Method according to any one of claims 12 to 14, wherein the unsaturated polyester resin is degassed before being converted into a form in which it is cured.

## Revendications

1. Résine de polyester insaturé contenant :
(a) un polyester ou un mélange de polyesters, produite à partir d'au moins un acide dicarboxylique insaturé et d'au moins un diol ; et
(b) au moins un silazane contenant une ou plusieurs doubles liaisons C=C et qui est accessible pour une copolymérisation avec une double liaison C=C de l'acide dicarboxylique.

2. Résine de polyester insaturé selon la revendication 1, contenant en outre :
(c) un diluant réactif.

3. Résine de polyester insaturé selon la revendication 2, dans laquelle le diluant réactif est un styrène substitué ou non substitué.

4. Résine de polyester insaturé selon l'une quelconque des revendications précédentes, contenant en outre :
(d) au moins un amorceur radicalaire.

5. Résine de polyester insaturé selon l'une quelconque des revendications précédentes, dans laquelle le polyester présente un indice d'acide inférieur à 12 mg/KOH.

6. Résine de polyester insaturé selon l'une quelconque des revendications précédentes, dans laquelle le silazane, qui est accessible pour une copolymérisation avec une double liaison C=C de l'acide dicarboxylique, présente des groupes vinyle liés à des atomes de silicium.

7. Résine de polyester insaturé selon la revendication 6, dans laquelle au moins une partie dudit silazane présente le composant-Si(R)(CH=CH₂)-NH-, R désignant H ou un groupe méthyle.

8. Matière à mouler à base de résine de polyester insaturé pouvant être obtenue ou qui est obtenue en réticulant une résine de polyester insaturé selon l'une quelconque des revendications 1 à 7.

9. Matière à mouler à base de résine de polyester insaturé selon la revendication 8, qui contient au moins une matière de renfort, en particulier des fibres de renfort.

10. Procédé pour produire une résine de polyester insaturé selon l'une quelconque des revendications 1 à 7, **caractérisé par** les étapes consistant à :
(a) fournir un polyester à partir d'au moins un diol et d'au moins un acide dicarboxylique insaturé comme défini dans l'une quelconque des revendications 1 et 5 ;
(b) fournir au moins un silazane qui contient une ou plusieurs doubles liaisons C=C et qui est accessible pour une copolymérisation avec une double liaison C=C de l'acide dicarboxylique comme défini dans l'une quelconque des revendications 1, 6 et 7 ;
(c) mélanger les composants de (a) et (b).

11. Procédé selon la revendication 10, dans lequel le polyester et/ou le silazane est/sont fournis à l'état dissous dans un solvant ou dans un diluant réactif et/ou dans lequel un inhibiteur de polymérisation est mélangé au polyester.

12. Procédé pour produire une matière à mouler à base de résine de polyester insaturé selon la revendication 8, comprenant :
(a) la fourniture d'une résine de polyester insaturé comme défini dans l'une quelconque des revendications 1 à 7, et
(b) le durcissement de la résine de polyester insaturé à l'aide d'un amorceur radicalaire pour former la matière à mouler.

13. Procédé pour produire une matière à mouler à base de résine de polyester insaturé contenant des fibres de renfort selon la revendication 9, comprenant :
(a) la fourniture d'une résine de polyester insaturé comme défini dans l'une quelconque des revendications 1 à 7 ;
(b) l'incorporation de fibres dans la résine de polyester insaturé ou l'imprégnation ou l'enduction des fibres, ou le remplissage d'un moule contenant des fibres, avec la résine de polyester ainsi que
(c) le durcissement de la résine de polyester insaturé à l'aide d'un amorceur radicalaire pour former la matière à mouler.

14. Procédé selon la revendication 12 ou 13, dans lequel la résine de polyester insaturée est obtenue en mettant en oeuvre le procédé selon la revendication 10 ou 11.

15. Procédé selon l'une quelconque des revendications 12 à 14, dans lequel la résine de polyester insaturé est dégazée avant d'être transférée dans un moule dans lequel elle va durcir.
